# EUROPEAN PATENT SPECIFICATION

(11) **EP 0 470 482 B1**
(45) Date of publication and mention of the grant of the patent: **28.12.1994**
(21) Application number: 91112770.2
(22) Date of filing: 30.07.1991
(51) Int. Cl.: B23D 47/04, B27B 5/06, B21D 43/14, B21D 43/10

(54) **Apparatus for turning a panel or a panel stack on the worktable of a cutting machine**
Vorrichtung zum Drehen einer Platte oder eines Pakets von Platten auf einem Arbeitstisch von einer Schneidmaschine
Dispositif de rotation d'un panneau ou d'une pile de panneaux sur une table de travail d'une machine tronçonneuse

(30) Priority: 08.08.1990 IT 1250490
(43) Date of publication of application: 12.02.1992
(73) Proprietor: GIBEN IMPIANTI S.p.A., I-40065 Pianoro (Bologna) (IT)
(72) Inventor: Benuzzi, Piergiorgio, I-40100 Bologna (IT)
(74) Representative: Porsia, Bruno

(56) References cited:
- DE-A- 2 614 164
- DE-A- 3 111 256
- DE-A- 3 607 454
- FR-A- 2 217 130

## Description

The invention relates to an apparatus for turning by 90° a panel or a panel stack on the worktable of a cutting machine, particularly for a pre-cutting operation and then a normal cutting operation to be performed in a panel or panel stack by a longitudinally cutting machine, according to the pre-characterizing part of claim 1.

An apparatus of this kind is known from the document DE-A-3 607 454. In this known apparatus the gripping means is stationary and the pushing means is swingable around a vertical axis to and from the cutting machine transversally to the cutting line thereof.

In a plant for cutting panels or panel stacks, it is known to provide upstream of the first machine in the plant, which is the longitudinally cutting machine, an apparatus for turning upon control a panel or a panel stack around a vertical axis, so as to have the same differently arranged relative to the cutting line of this cutting machine, in order to carry out any cutting pattern by the so-called "pre-cutting" operation.

The object of the invention is to provide an apparatus for turning by 90° a panel or a panel stack on the worktable of a cutting machine according to the pre-characterizing part of claim 1, in which the worktable has reduced overall dimensions and can be made by conventional techniques.

This problem is solved by the invention with the features indicated in the charaterizing part of claim 1.

The apparatus according to the invention allows a reduction of the floor space of the worktable for supporting a panel stack as it is being turned by 90° and permits the said worktable being made with conventional techniques, while its construction is not of a special type, as it is instead required in the known art.

The construction of an apparatus according to the invention and the advantages arising therefrom will clearly appear in the following specification of one preferred embodiment thereof, which is shown by way of a non-limiting example in the Figures of the six annexed sheets of drawing, in which:

Figure 1 is a plan view showing a possible panel-pre-cutting pattern to be carried out on a panel stack.

Figures 2 and 3 are plan views of a diagram illustrating how a panel stack is turned by the apparatus of the invention.

Figures 4 and 5 are side views with parts in section, of the gripping means for holding a panel stack while it is being turned, which show the various operative and rest positions of the same.

Figure 6 is a sectional view of this gripping means, taken on line VI-VI in Figure 4, and showing some details of the same.

Figure 7 is a sectional view of this gripping means, taken on line VII-VII in Figure 6, and showing a further detail of the same.

Figure 8 is a top plan view of the gripping means fitted on the pusher carriage of the longitudinally cutting machine.

Figure 9 is a side view of the downwardly withdrawable pushing means that in combination with the gripping means according to the preceding Figures, causes a panel stack to be turned.

Figure 10 is a view with parts in cross-section of the pushing means according to Figure 9, taken on line X-X, and showing some details of the same.

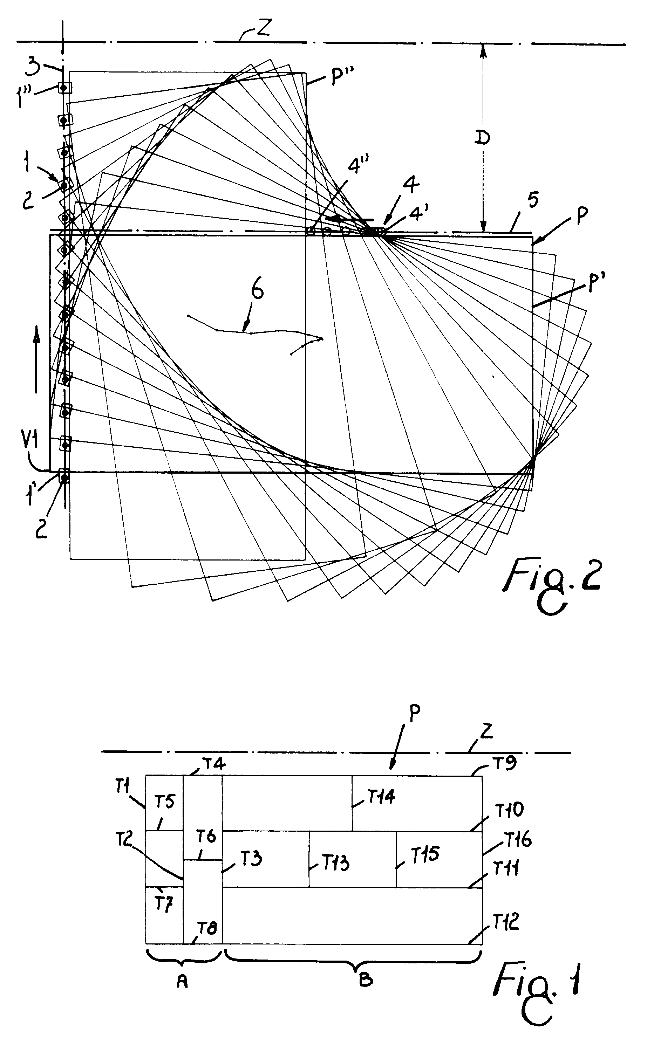

In Figure 1, reference P denotes a panel or a panel stack, and reference Z denotes the cutting line of the first longitudinally cutting machine in an angular cutting plant, by which this panel stack should be cut, for example, according to the cutting pattern shown in this Figure. A panel stack P is usually placed on the worktable before the cutting line Z of the said longitudinally cutting machine, with its long sides being arranged parallel thereto.

In the known art it is contemplated to carry out a pre-cutting operation on that part of a panel stack which is designated by reference A in Figure 1, by causing the panel stack to be turned by 90° around a vertical axis, so that the panel stack short side associated with the part A, will be arranged parallel to the cutting line, Z of the first machine normally making longitudinal cuts. The panel stack having been thus turned, is then advanced with programmed dwelling times to the cutting line Z of the said first machine by the pusher thereof, for the trimming cut T1 and the cuts T2 and T3 to be transversely made in the said part A. The just cut stacked panel strips will be then acted upon by the pusher or pushers of the second, normally transversely cutting machine, to the cutting line of which these strips are advanced for the longitudinal cuts T4, T5, T6, T7, T8 to be made in the said part A.

The panel stack part B left on the worktable of the first longitudinally cutting machine, is turned by 90° and returned into the condition as shown in Figure 1, so that the said part will be then advanced to the cutting line Z of the said first machine, for the longitudinal cuts T9, T10, T11, T12 to be made therein. By the second transversely cutting machine the transverse cuts T13, T14, T15, T16 will be made in the stacked panel strips resulting from the said cuts T9-T12.

The invention relates to an apparatus for a panel stack P to be subjected to the above-disclosed 90° panel-stack-turning steps.

Referring to Figure 2, there is shown that the said panel stack-turning apparatus comprises a gripping means 1 which is for clamping a panel stack P at a point of its perimeter, and which is rotatable around a vertical axis 2, and is shiftable near to, and away from the cutting line Z of the longitudinally cutting machine, along the straight line 3 which is parallel to, and coincides with, or is at a short distance from the "zero" datum side of the said longitudinally cutting machine worktable Q, i. e, the side that is the left-hand side in the shown example, in which respect the positioning of a panel stack remains always the same with any different panel stack sizes. Such shiftments of the gripping means must be programmable as a function of the size of a panel pack P and, for this purpose, the gripping means 1 can be fitted with advantage on the carriage mounting the gripper members associated with the pusher of the first machine normally making longitudinal cuts at its cutting line Z, which carriage is already provided with motor means for programmable precise shiftments to be effected. The gripping means 1 is operated by servo controls, by which this gripping means is rotated around its axis 2 so as to be properly oriented for correctly clamping a panel stack during the panel stack-turning steps, and is vertically shifted along the said axis so as to be moved from an uplifted position in which it is prevented from interfering with a panel stack, into a lowered down position in which it is caused to cooperate with a panel stack (see hereinafter).

Jointly with the gripping means 1, the panel stack-turning apparatus of the invention comprises a pushing means preferably in form of a freely rotatable, vertical axis roller 4, which upon control can be lifted from the worktable Q supporting a panel stack P, up to a level being at least equal to the thickness thereof, and which must be withdrawable under the said worktable, in order to be prevented from interfering with a panel stack. This pushing roller is fitted on a carriage which is movable along a line 5 being parallel to the cutting line Z of the longitudinally cutting machine, and lying at a proper distance D therefrom.

The worktable Q supporting a panel stack P, is formed at the line 5 along which the pushing roller 4 is motivated, with an elongated rectilinear aperture arranged parallel to the cutting line Z of the longitudinally cutting machine, and being suitably wide for the roller 4 to be allowed to run therein. The said panel stack-supporting worktable Q may be of any known construction and may be, for example, of the modular type.

The thus conceived apparatus is operated as follows.

A panel stack P is at first placed on the worktable of the longitudinally cutting machine, in front of its cutting line Z, and is positioned as shown by P' in Figure 2. The forward long side of this panel stack is arranged upstream of, and at a short distance from the elongated aperture 5 in which the pushing roller 4 is caused to run, the said roller being moved into the position 4' and being lifted up before this panel stack.

The uplifted gripping means 1 is moved behind this panel stack P, into the position shown by 1', and is then lowered down and caused to clamp the panel stack by its rear long side, close to the corner V1 thereof. Nextly, the lowered down gripping means is being advanced toward the cutting line Z of the longitudinally cutting machine and is caused to reach the position 1'', and the uplifted pushing roller 4 is being shifted in timed relation from the position 4' to the position 4''. Thus, the panel stack P is turned by 90° so that from the position shown by P' the same is moved into the position shown by P'', as required for a pre-cutting operation to be performed in its part A. The broken line 6 shows how the barycenter of the panel stack is being displaced while the panel stack is being turned by the apparatus of the invention. With the gripping and pushing means 1 and 4 being moved in an electronically controlled precise manner, the panel stack can be turned exactly of 90°.

Once the panel stack has been thus turned, the gripping means 1 and the pushing roller 4 are mutually neutralized, and the stacked panels may be driven against one or more left-hand side arranged, stacked panels line-up means of the withdrawable type, not shown, for example by the pushing roller 4, and may be by another roller mounted on its own motivating means, by which this other roller is moved parallel to the line 5. With the stacked panels being lined up, even a not too close tolerance can be allowed in the 90° turning of the panel stack by the apparatus according to the invention, with the advantages resulting from such a lined-up condition of the stacked panels.

After the stacked panels having been turned and may be lined up, the stacked panels are acted upon by the gripper members associated with the pusher of the first, normally longitudinally cutting machine, and are advanced to the cutting line Z thereof for the transverse cuts T1, T2, T3 to be made in its part A, as stated above by referring to Figure 1.

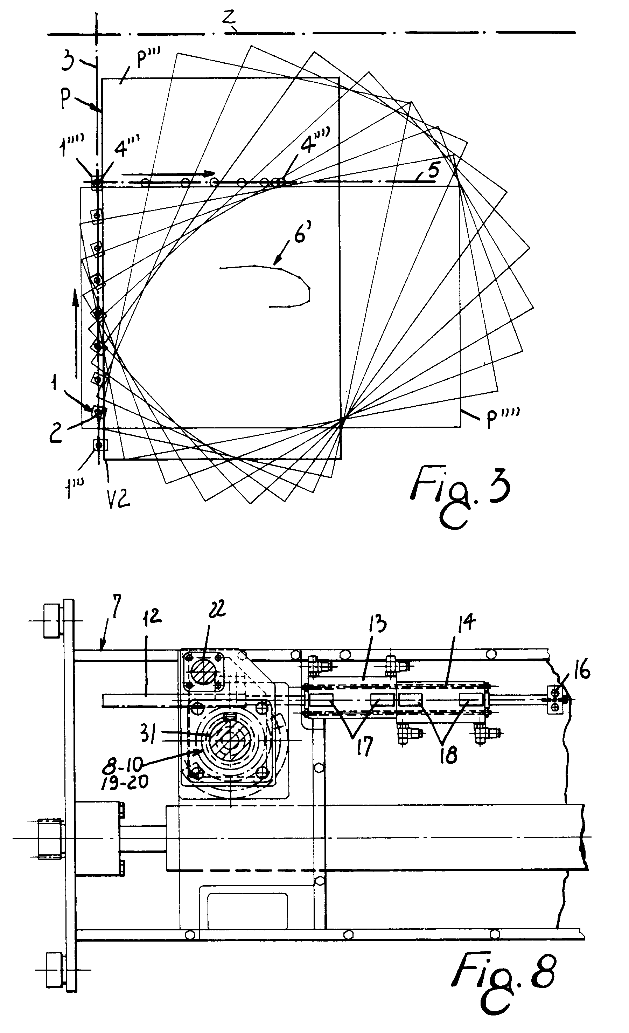

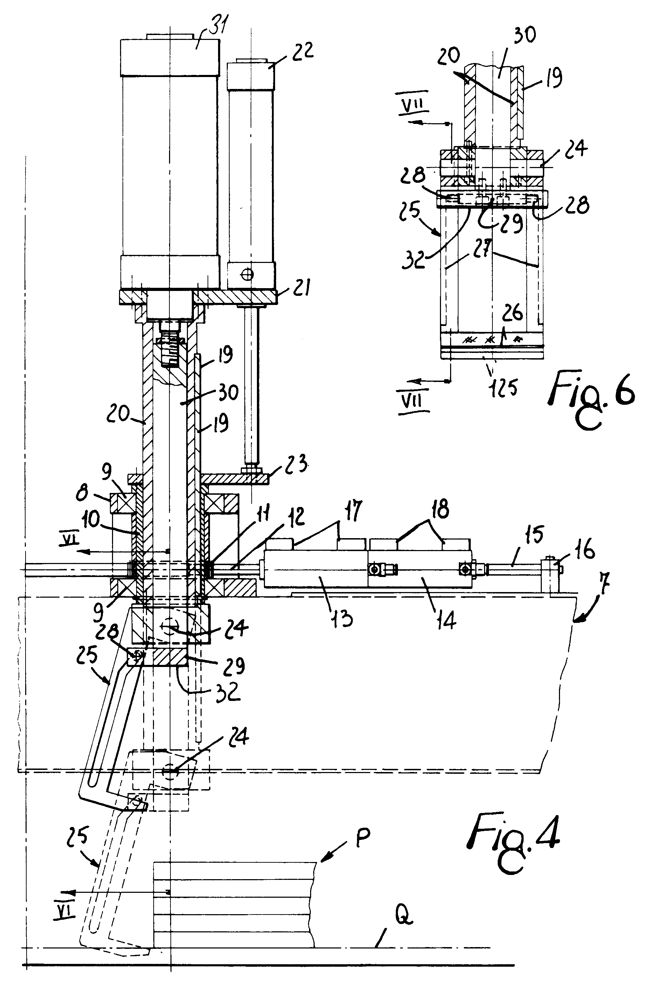

Nextly to the pre-cutting operation on the panel stack part A having been completed by the second cutting machine, the remaining panel stack part B (Figure 1) is moved backward into the position shown for example by P''' in Figure 3. The pusher associated with the first machine making longitudinal cuts at its cutting line Z, now drives the gripping means 1 into the position shown by 1''', so that this gripping means will be allowed to nextly clamp the remaining panel stack part B by its one long side, close to the corner V2.

At this time, the pushing roller 4 is located in the position shown by 4''', and is uplifted.

In timed relation, while the gripping means 1 is being drawn near to the cutting line Z of the longitudinally cutting machine, so that the gripping means will be transferred from the position 1''' to the position 1'''', the uplifted pushing roller 4 is being moved from the position 4''' into the position 4'''', whereby the panel stack part B will be turned in clockwise direction by 90°, and will be arranged as shown by P''''.

The pushing roller 4 is lowered down, the gripping means 1 is set in open condition and is lifted up, and the part B of the panel stack P, which may be pushed against left-hand side arranged, line-up means, is then advanced to the cutting line Z of the longitudinally cutting machine, for the longitudinal cuts T9-T12 to be made therein.

In Figure 3, the broken line 6' shows the displacement of the barycenter of the part B of panel stack P, while this part is being lastly turned by 90°.

Referring to Figures 4 to 8, a possible embodiment of the gripping means 1 will be now disclosed.

A support 8 is fixedly connected to the upper part of the pusher carriage 7 of the first machine normally making longitudinal cuts at its cutting line Z, and a bushing 10 with its axis being vertically arranged, is rotatably carried by the said support through bearings 9. Coaxially keyed to the outside of said bushing is a crown gear 11 which is in mesh with a rack 12 driven by a cylinder-and-piston unit 13 coaxially fastened by its rear end side to the fore end side of a further cylinder-and-piston unit 14, whose stem 15 is fixedly connected at 16 to the pusher carriage 7. Reference numerals 17 and 18 denote magnetic sensors for detecting the end-of-stroke positions of the pistons of the said pneumatically operated units 13 and 14.

The bushing 10 is formed with a longitudinal slot engaged by a key 19 for a tube 20 to be slidably guided thereby in the said bushing, which tube carries at its upper end a projectingly arranged plate 21 made integral therewith, to which the body is fastened of a cylinder-and-piston unit 22, with its stem being vertically directed downward, and being fastened to a plate 23 made integral with the upper end of the said bushing 10. The backward and forward vertical stroke of the stem of the cylinder-and-piston unit 22 results in the tube 20 being accordingly lifted up and lowered down.

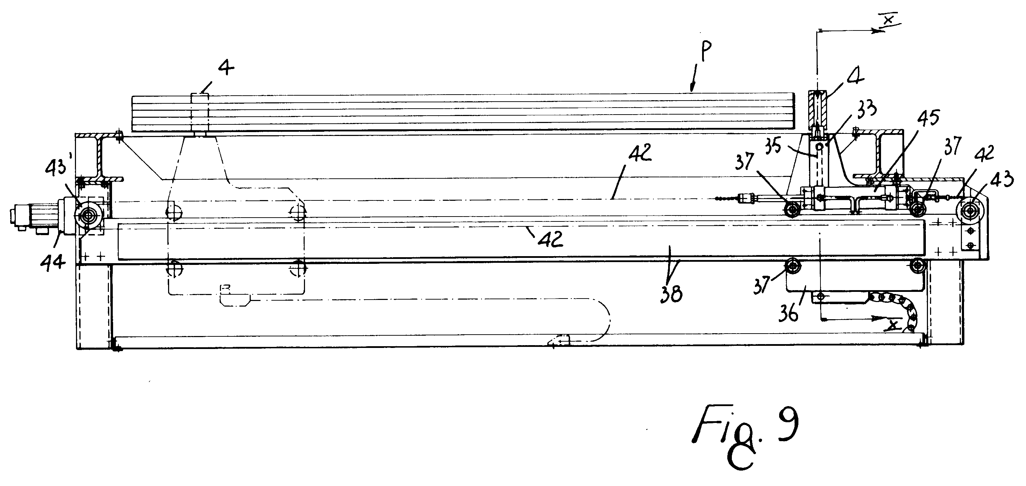

Pivotally connected at 24 to the lower end of tube 20, are the upper ends of the one transversally arranged jaw member 25 of the gripping means 1, which in front view has a "U"-shaped configuration as shown in Figure 6, while in side view the same has and "L"-shaped configuration, as shown in Figure 4.

Reference numeral 26 denotes a suitable, elastic/yieldable added material which is for covering the inward flat face of the foot 125 of the said one jaw member 25.

The legs of the one jaw member 25 of the gripping means 1 have a respective slot 27 formed in their inward sides, with its uppermost section 127 being suitably inclined, and with the rest thereof extending straight along the longitudinal axis of the jaw member legs. Set in cooperation with the slots 27 are two pins 28 arranged in opposite positions, which are carried by a crosspiece 29 being fixedly connected to the lower end of a stem 30 which is axially slidably fitted in tube 20, and is fastened to the stem of a cylinder-and-piston unit 31 whose body is fastened to the plate 21. This crosspiece 29 constitutes the other jaw member of the gripping means, and has its downward flat face provided with a covering 32 made from a suitable elastic/yieldable material.

When the gripping means 1 is in rest position, its jaw members 25 and 29 are set in their uplifted position, as shown by solid lines in Figure 4. The pins 28 are now caused to cooperate with the inclined uppermost section 127 of slots 27, and the foot of the uplifted jaw member 25 is laterally offset from the projection in plan view of the upper jaw member 29.

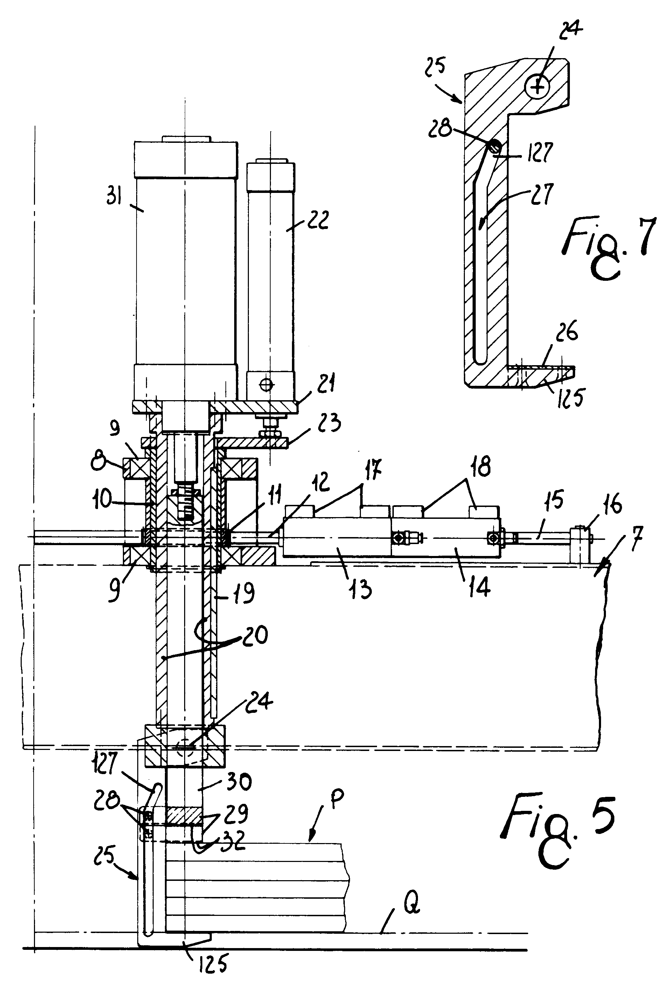

When the gripping means 1 is to be set in operation, its uplifted jaw member 25 is at first correctly arranged by the actuated cylinder-and-piston units 13, 14, in respect of a panel stack P to be clamped thereby. Then the tube 20 is lowered down upon control by the stem of the actuated cylinder-and-piston unit 22 being retracted. The gripping means jaw member 25 being kept in open condition, is thus moved down into the position shown by dash-and-dot lines in Figure 4. In automatic phase succession, the gripping means upper jaw member 29 is being lowered down, and according to the operative sequence shown in Figure 5, before the jaw member 29 having been moved into contact with a panel stack P, this jaw member moves the pins 28 into cooperation with the straight section of slots 27, whereby a swinging movement of the jaw member 25 is promoted, which results in its foot 125 being slipped by its active part 26 under the panel stack P, however without the same being allowed to interfere therewith. As soon as the upper jaw member 29-32 has been caused to get in contact with the panel stack, by reaction the lower jaw member foot 125-26 is lifted up thereby, so that the panel stack is firmly clamped by the gripping means of the invention. The gripping means is made to correspond to the height dimension of the panel stack without lifting the same, in that the cylinder-and-piston unit 22 is set in its inoperative condition, or is in a condition in which it reacts in a resilient manner.

The jaw member 25 can be so provided and/or so positioned relative to a panel stack P, that this jaw member will be either caused to contact the panel stack at one of its end sides, as shown in Figure 5, or to not come in touch therewith.

In the reverse step by which the gripping means will be neutralized, the cylinder-and-piston unit 22 is set in operative condition, so that the upper jaw member is at first moved into its uplifted position, and the lower jaw member is then swung away from a panel stack by the said upper jaw member. The gripping means having been thus arranged in open condition, is lifted up.

The worktable Q supportig a panel stack P, is so provided that the panel stack edge portion lying over the line 3, along which the gripping means 1 is motivated, is left in such a free condition that it does not interfere with the gripping means when the same is run through its active travel.

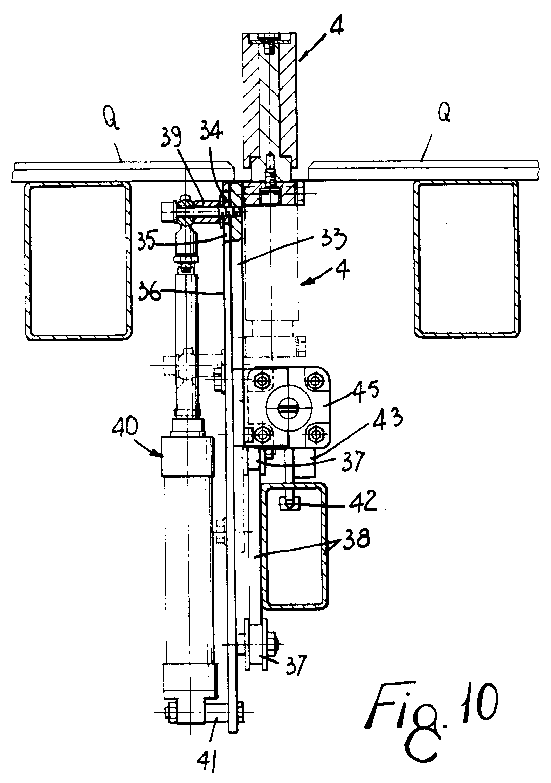

Referring to Figures 9 and 10, a possible embodiment will be now disclosed of the pushing roller 4 which is operated along the longitudinally cutting machine worktable, and is withdrawable thereunder. In the said Figures there appears that this roller 4 is vertically and freely rotatably fitted on a slide 33 which by means of rollers 34 is caused to slide in a slot 35 vertically formed in a carriage 36, consisting of a plate arranged in upright position, with grooved wheels 37 being mounted on one of its sides so as to project therefrom, and running on a fixed straight guide 38 arranged in an underlying parallel relation with the elongated aperture 5 in the worktable Q, through which the said pushing roller is lifted up, to be disposed in operative condition. Through an extension 39 secured to the spindle of one of these rollers 34, the slide 33 is connected to the stem of a pneumatically operated cylinder-and piston unit 40 whose body is anchored at 41 to the plate-like carriage 36. As a result of the said cylinder-and-piston unit being actuated, the pushing roller 4 is moved from its operative position into its rest position, and vice-versa, which in Figure 10 are respectively shown by solid lines and by dash-and-dot lines.

With the interposition of at least one shock absorber, the carriage 36 is connected to the ends of a toothed belt or chain 42 led over horizontal axis sprockets 43, 43', one of which is driven by a motive unit 44 with an electronically controlled motor. Provisions may be made for the ends of chain 42 to be connected to the double stem of a pneumatically operated cylinder unit 45 whose body is fastened to the carriage 36. Thanks to the provision of this unit, the said carriage 36 can be imparted any movements with a resilient character, independently from the above-disclosed, programmed precise shiftments by the aforementioned motor means, which are, for example, useful when the roller 4 will have to be used as a means for orderly arranging stacked panels against sidewise located line-up means.

It should be understood that the specification refers to one preferred embodiment of the invention, to which numerous changes and modifications may be brought without departing from the scope of the claims, the more so in construction, which, for example, may relate to the feature that the gripping means 1 is mounted on its own carriage being movable along its own guide, or along one of the guides for the pusher carriage of the longitudinally cutting machine, and being however driven by its own motive means. Such a modified embodiment would allow to eliminate any dead times in the travel of the carriage being returned to the rear side of a panel stack, after the panel stack having been turned as shown in Figure 2, for a pre-cutting operation to be performed therein. Further changes may relate to the shape of the gripping means, or to the use of a blade-like pushing means in place of the pushing roller 4.

## Claims

1. An apparatus for turning by 90° a panel or a panel stack (P) on the worktable (Q) of a cutting machine, particularly for a pre-cutting operation and then a normal cutting operation to be performed in a panel or panel stack (P) by a longitudinally cutting machine, said apparatus comprising:
a) a gripping means (1) of the withdrawable type, which can be rotated around a vertical axis (2), and upon control is caused to clamp a panel stack (P) in the region of one of its corners, and which is associated with shifting means (7) for programmable, precise shiftments to be made, such that the panel stack (P) will be turned in clockwise or anticlockwise direction,
b) a pushing means (4) of the withdrawable type, that concurrently with the said gripping means (1) is caused to act on a panel stack (P) in a programmable manner, so that it helps in the desired turning of the panel stack (P),
characterized by the following features:
c) the gripping means (1) is caused to perform a rectilinear movement (3) near to, and away from the cutting line (Z) of the longitudinally cutting machine,
d) the gripping means (1) is caused to clamp a panel stack (P) in the region of one of its rear corners, and the panel stack (P) will be turned in clockwise or anticlockwise direction, depending on the panel stack being clamped close to its left-hand corner or to its right-hand corner,
e) the pushing member (4) is caused to act on a panel stack (P) by being moved parallel to the cutting line (Z) of the longitudinally cutting machine,
f) the whole arrangement being so provided, that the floor space is reduced of the worktable (Q) for supporting a panel stack (P) as the same is being turned by 90° the said worktable being made with conventional techniques while its construction is not of a special type.

2. The apparatus according to Claim 1, in which the gripping means (1) for turning a panel stack, is fitted on the longitudinally cutting machine pusher carriage (7) which is normally operated so as to be moved in a programmable precise manner, provisions being made for the gripping means to be neutralizable or settable in operative condition as needed, for example by being lifted up or lowered down, the gripping means being fitted on the said carriage, so as to be rotatable around its vertical axis (2), under the control of means (11, 12, 13, 14) for rotating the same, which upon control will correctly position the gripping means in the round angle, so that the gripping means will be suitably oriented either for the first or the second panel stack-turning step to be performed, as required respectively for a panel stack pre-cutting operation, and for the remaining panel stack part (B) to be returned into the condition of its former arrangement relative to the cutting line (Z) of the longitudinally cutting machine.

3. The apparatus according to Claim 1, characterized by comprising programmable control means for causing the gripping means (1) to clamp a panel stack by its rear long side close to the corner (V1) thereof, so that in the first panel stack-turning step, the panel stack will be turned by 90° around a vertical axis, and will be thus arranged with its long sides perpendicular to the cutting line (Z) of the longitudinally cutting machine, the said corner (V1) coinciding with, or being near to the longitudinally cutting machine worktable "zero" datum side, in which respect the positioning of a panel stack remains always the same with any different panel stack sizes, provisions being made on starting the said first panel stack-turning step, for the pushing means (4) to be positioned before the panel stack fore long side, at an intermediary point thereof, so that in phased relation with the gripping means being shifted, the said pushing means (4) is being moved near to the line (3) along which the said gripping means is being shifted, until the panel stack long sides have been turned by 90°.

4. The apparatus according to Claim 1, characterized by comprising programmable and control means for causing the gripping means (1) to clamp the panel stack by its one long side that is turned toward the cutting machine worktable "zero" datum side, close to the corner (V2) between this one panel stack long side and the panel stack rear short side, so that in the second panel-stack turning step a panel stack will be turned by 90° around a vertical axis, and will be thus re-arranged in its former condition relative to the cutting line (Z) of the longitudinally cutting machine, the pushing means (4) being located, at the beginning of this second panel stack-turning step, close to, and at an intermediary point of the said one panel stack long side that is acted upon by the gripping means, and being moved upon control away from the line (3) along which the gripping means is being motivated, until the said one panel stack long side has been turned by 90°.

5. The apparatus according to the preceding Claims, in which the gripping means (1) for clamping and turning a panel stack, comprises one jaw member (25) with an "L"-shaped outline in side view, which is pivotally connected by its upper ends at (24) horizontally to the lower end of a vertically arranged tube (20) being axially slidable in a bushing (10) to which this tube is keyed, the said bushing being carried so as to be rotatable around its axis, by a support (8) fixedly connected to the upper part of the longitudinally cutting machine pusher carriage (7), and a projectingly arranged plate (21) being attached to the upper end of said tube, with the body of a vertically arranged, pneumatically operated cylinder-and-piston unit (22) being fastened to the said plate (21), while the downwardly directed stem of said unit (22) is connected to a plate (23) which is attached to the upper end of said bushing (10) so as to project therefrom, and a stem (30) being so provided as to be axially slidable in the said tube, and being connected by its upper end to the stem of a pneumatically operated cylinder-and-piston unit (31) whose body is fastened to the plate (21) at the upper end of said tube, which stem (30) carries at its lower end the upper, flat, other jaw member (29) of the gripping means, which is fitted with pins (28) in the ends of a side extension thereof, the said pins being slidable in longitudinal slots (27) formed in either inward sides of the "L"-shaped lower jaw member (25), and having each an inclined uppermost section (127) that when it is engaged by the said pins, causes the said lower jaw member to take an inclined position, so that the lower part or foot (125) thereof will be set off the projection in plan view of the said upper jaw member, and with the lower jaw member being arranged in such an inclined position, the said gripping means lower jaw member will be then lowered down, and the gripping means upper jaw member will be nextly lowered down upon control, so that owing to the said pins being moved downward by the upper jaw member - during the first part of its downward travel, so as to be caused to cooperate with the straight section of the slots in the lower jaw member inward sides, such a swinging movement of the lower jaw member is promoted, that its foot (125) will be slipped under a panel stack, however without the said foot being allowed to interfere therewith, and as soon as the upper jaw member has completed its downward travel by getting in contact with the panel stack, by reaction the lower jaw member will be lifted up by the upper jaw member, which results in the panel stack being clamped by the gripping means.

6. The apparatus according to Claim 5, in which the bushing (10) rotatably supporting the gripping means (1) for clamping a panel stack, is fitted with a crown gear (11) which is keyed to the outside of said bushing, and is in mesh with a rack (12) driven by the pneumatically operated cylinder-and-piston units (13, 14), by which the gripping means can be differently arranged in the round angle, so as to be caused to correctly clamp a panel stack before the two successive panel stack-turning steps.

7. The apparatus according to Claim 1, in which the pushing roller (4) that in combination with the said gripping means (1) is caused to act on a panel stack to be turned, is vertically and freely rotatably fitted, so as to be liftable and lowerable by means of a suitable cylinder-and-piston unit (40), on a slide (33) which is mounted on a carriage (36) being slidable on a horizontally arranged guide (38) located under the panel stack-supporting worktable, and in parallel relation with the line (5) along which the said pushing roller is motivated, provisions being made for the said carriage to be operated in a precise manner through a positive motion transmission drive (42, 43, 43') by an electronically controlled geared motor (44), the said motion transmission drive being of the toothed wheels/toothed belt type, of the sprocket wheels/chain type, or of the pinions/rack type.

## Patentansprüche

1. Vorrichtung zum Drehen einer Platte oder eines Plattenstapels (P) auf dem Arbeitstisch (Q) einer Schneidmaschine, insbesondere zum Vorschneiden, gefolgt von einem normalen Schneidverfahren an einer Platte oder einem Plattenstapel (P) mit Hilfe einer in Längsrichtung schneidenden Maschine, wobei die Vorrichtung folgende Merkmale aufweist:
a) Greifmittel (1), die zurückgezogen werden können, die um eine vertikale Achse (2) gedreht werden können, und die, bei Anliegen eines entsprechenden Steuerungssignals, einen Plattenstapel (P) im Bereich einer der Ecken des Stapels klammernd greifen können und die mit einer Verschiebeeinrichtung (7) verbunden ist, die zu programmierbaren, präzisen Verschiebungen dient derart, daß der Plattenstapel (P) im Uhrzeigersinn oder im Gegenuhrzeigersinn gedreht wird,
b) Schiebemittel (4), die ebenfalls zurückgezogen werden können, und die zusammen mit den Greifmitteln (1) auf den Plattenstapel (P) programmierbar einwirken, so daß die gewünschte Drehung des Plattenstapels (P) unterstützt wird,
**dadurch gekennzeichnet,**
c) daß das Greifmittel eine gerade Bewegung (3) auf die Schneidlinie (Z) der Längs-Schneidmaschine zu- und von ihr wieder hinweg ausführt,
d) daß das Greifmittel (1) einen Plattenstapel (P) im Gebiet einer ihrer rückwärtigen Ecken greift, und daß der Plattenstapel (P) im Uhrzeigersinn oder im Gegenuhrzeigersinn gedreht wird, abhängig davon, ob der Plattenstapel benachbart seiner linken Ecke oder seiner rechten Ecke gegriffen wird,
e) daß das Schiebeelement (4) auf einen Plattenstapel (P) dadurch einwirkt, daß es parallel zur Schneidlinie (Z) der Längs-Schneidmaschine einwirkt,
f) daß die gesamte Anordnung so ausgebildet ist, daß der für den Arbeitstisch (Q) benötigte Platz zum Halten eines Plattenstapels (P) verringert wird, wenn dieser um 90° gedreht wird, wobei der Arbeitstisch übliche Techniken und auch keine spezielle Konstruktion aufweist.

2. Vorrichtung nach Anspruch 1,
**dadurch gekennzeichnet,**
daß das Greifmittel (1) zum Drehen eines Plattenstapels am Schlitten (7) für den Schieber der Längs-Schneidmaschine angepaßt ist, der normalerweise so betätigt wird, daß er programmierbar und präzise bewegt wird, wobei Vorsorge dafür getroffen ist, daß das Greifmittel, je nach Bedarf, neutralisiert oder in den Betriebszustand eingestellt werden kann, beispielsweise indem es entweder angehoben oder abgesenkt wird, wobei das Greifmittel so am Schlitten befestigt ist, daß es um seine vertikale Achse (2) gedreht werden kann, und zwar unter der Steuerung von Mitteln (11, 12, 13, 14) zum Drehen dieses Bauteils, welches bei Vorliegen eines entsprechenden Steuerungssignals das Greifmittel im Winkel richtig positioniert, so daß das Greifmittel entweder für den ersten oder für den zweiten Drehschritt des Stapels richtig ausgerichtet ist, wie dies entweder für das Vorschneiden des Stapels oder für das Zurückbringen des verbleibenden Stapelteils (B) in dessen vorhergehende Anordnung relativ zur Schneidlinie (Z) der Längs-Schneidmaschine notwendig ist.

3. Vorrichtung nach Anspruch 1,
**dadurch gekennzeichnet,**
daß eine programmierbare Steuerung vorgesehen ist, mit der das Greifmittel (1) einen Plattenstapel an seiner rückwärtigen Längsseite greift, und zwar benachbart der Ecke (V1) des Stapels, so daß bei dem ersten Drehschritt für den Stapel der Plattenstapel um 90° um eine vertikale Achse gedreht wird und dadurch so angeordnet wird, daß seine Längsseiten rechtwinkelig zur Schneidlinie (Z) der Längs-Schneidmaschine verlaufen, wobei diese Ecke (V1) mit der Nullseite des Arbeitstisches der Längs-Schneidmaschine zusammenfällt oder sich in deren Nähe befindet, wobei das Positionieren eines Plattenstapels auch bei unterschiedlichen Großen des Plattenstapels stets unverändert bleibt, wobei weiterhin Vorsorge dafür getroffen ist, daß beim Starten des ersten Schritts zum Drehen des Stapels die Schiebeeinrichtung (4) vor der Längsseite des Plattenstapels positioniert wird, und zwar an einem Zwischenpunkt, so daß in zeitlich abgestimmter Beziehung mit der verschobenen Greifeinrichtung das Schiebemittel (4) nahe zu der Linie (3) bewegt wird, längs derer die Greifeinrichtung verschoben wird, bis die Längsseiten des Plattenstapels um 90° gedreht worden sind.

4. Vorrichtung nach Anspruch 1,
**dadurch gekennzeichnet,**
daß programmierbare Steuerungsmittel vorgesehen sind, mit deren Hilfe die Greifeinrichtung (1) den Plattenstapel an derjenigen Längsseite klammernd gegriffen wird, die zur Nullseite des Arbeitstisches der Schneidmaschine gedreht wird, und zwar benachbart derjenigen Kante (V2) zwischen dieser Längsseite des Stapels und der rückwärtigen kürzeren Seite des Plattenstapels, so daß beim zweiten Drehungsschritt des Plattenstapels ein Plattenstapel um 90° um eine vertikale Achse gedreht wird und dadurch in seinem früheren Zustand relativ zur Schneidlinie (Z) der Längs-Schneidmaschine wieder angeordnet wird, wobei das Schiebemittel (4) am Anfang dieses zweiten Drehschritts für den Stapel sich benachbart der Längsseite des Plattenstapels befindet und an einem Zwischenpunkt dieser Längsseite des Plattenstapels, auf den die Greifeinrichtung eingewirkt hat und die gesteuert hinweg von der Linie (3) bewegt wird, und zwar zusammen mit der Greifeinrichtung, die aktiviert ist, bis die betreffende Längsseite des Plattenstapels um 90° gedreht worden ist.

5. Vorrichtung nach den vorhergehenden Patentansprüchen,
**dadurch gekennzeichnet,**
daß das Greifmittel (1) zum Klammern und Drehen eines Plattenstapels eine Klaue (25) aufweist, die in einer Seitenansicht L-förmig profiliert ist, die an ihren oberen Enden (24) horizontal schwenkbar an das untere Ende eines vertikal angeordneten Rohres (20) angelenkt ist, welches in einer Buchse (10) axial gleitend angeordnet ist, mit der das Rohr fest verbunden ist, wobei die Buchse so befestigt ist, daß sie um ihre Achse gedreht werden kann, und zwar mit Hilfe einer Stütze (8), die fest mit dem oberen Teil des Schiebeschlittens (7) der Längs-Schneidmaschine verbunden ist, wobei eine vorspringende Platte (21) am oberen Ende des Rohres befestigt ist, wobei fernerhin der Körper einer vertikal angeordneten, pneumatisch betätigten Kolben-Zylinder-Einheit (22) an der Platte (21) befestigt ist, während die nach unten gerichtete Stange der Einheit (22) mit einer Platte (23) verbunden ist, die mit dem oberen Ende der Buchse (10) verbunden ist, so daß das Teil aus der Buchse vorsteht und wobei eine Stange (30) so vorgesehen ist, daß sie axial in dem Rohr gleiten kann und mit ihrem oberen Ende mit der Stange einer pneumatisch betätigten Kolben-Zyinder-Einheit (31) verbunden ist, deren Körper mit der Platte (21) am oberen Ende des Rohres verbunden ist, welche Stange (30) an ihrem unteren Ende die flache andere Klaue (29) der Greifeinrichtung trägt, die mit Stiften (28) in die Enden an einer Fortsetzung des Teils eingepaßt ist, wobei die Stifte gleitend in Längsschlitzen (27) vorgesehen sind, die in den Innenseiten des L-förmigen unteren Klauengliedes (25) geformt sind, wobei weiterhin jedes Teil einen geneigten obersten Abschnitt (127) aufweist, so daß, wenn das Teil von den Stiften gegriffen wird, das untere Klauenglied eine geneigte Position einnimmt, so daß der untere Teil oder der Fuß (125) dieses Teils in Bezug auf die Projektion des oberen Klauengliedes in einer Draufsicht versetzt wird, wobei weiterhin das untere Klauenglied in einer derartigen geneigten Position angeordnet wird, wobei das untere Klauenglied des Greifelements dann nach unten abgesenkt wird, und wobei das obere Klauenglied des Greifelements anschließend gesteuert abgesenkt wird, so daß, weil die Stifte vom oberen Klauenglied nach unten bewegt werden, und zwar während des ersten Teils der nach unten gerichteten Bewegung, so daß sie mit dem geraden Abschnitt der Schlitze in den Innenseiten des unteren Klauenglieds zusammenwirken, so daß eine derartige Schwenkbewegung des unteren Klauenglieds verursacht wird, daß sein Fuß (125) unter den Plattenstapel gleitet, aber ohne daß der Fuß damit zusammenstößt, und sobald das obere Klauenglied seine nach unten gerichtete Bewegung dadurch beendet hat, daß es in Kontakt mit dem Plattenstapel kommt, daß dann durch eine Reaktion das untere Klauenglied vom oberen Klauenglied angehoben wird, so daß der Plattenstapel von dem Greifmittel klammernd gegriffen wird.

6. Vorrichtung nach Anspruch 5,
**dadurch gekennzeichnet,**
daß die Buchse (10), die drehbar die Greifeinrichtung (1) trägt, um einen Plattenstapel zu klammern, mit einer Zahnscheibe (11) versehen ist, die mit der Außenseite der Buchse verkeilt ist, und die mit einer Zahnstange (12) kämmt, die von den pneumatischen Kolben-Zylinder-Einheiten (13, 14) angetrieben ist, mit deren Hilfe das Greifmittel im Winkel unterschiedlich angeordnet werden kann, so daß es einen Plattenstapel vor den beiden aufeinander folgenden Drehschritten für den Plattenstapel richtig greifen kann.

7. Vorrichtung nach Anspruch 1,
**dadurch gekennzeichnet,**
daß die Schieberolle (4), die zusammen mit dem Greifmittel (1) auf einem zu drehenden Plattenstapel einwirkt, vertikal und frei drehbar angeordnet ist, so daß sie mit Hilfe einer geeigneten Kolben-Zylinder-Einheit (40) anhebbar und absenkbar ist, und zwar auf einem Gleitstück (33), das an einem Schlitten (36) befestigt ist, der auf einer horizontal angeordneten Führung (38) gleiten kann, die sich unter dem Arbeitstisch zum Halten des Plattenstapels befindet, und zwar parallel zu der Linie (5), längs derer die Schieberolle bewegt wird, wobei Vorsorge dafür getroffen ist, daß der Schlitten mit Hilfe eines positiven Transmissionsantriebs (42, 43, 43') und mit Hilfe eines elektronisch gesteuerten Getriebemotors (44) präzise betätigt wird, wobei der Bewegungs-Transmissionsantrieb als wesentliches Bauelement die Kombination von Zahnrädern und Zahnriemen aufweist, Kettenräder mit einer Kette oder Zahnräder mit einer Zahnstange.

## Revendications

1. Dispositif pour faire pivoter de 90° un panneau ou une pile de panneaux (P) sur la table de travail (Q) d'une machine de coupe, en particulier pour une opération de précoupe et ensuite une opération de coupe normale à effectuer sur un panneau ou une pile de panneaux (P) par une machine de coupe longitudinale, ledit dispositif comprenant :
- a) un moyen d'agrippement (1) du type amovible, qui peut pivoter autour d'un axe vertical (2) et, sur commande, être actionné pour saisir une pile de panneaux (P) au niveau de l'un de ses angles, et qui est associé à un moyen de déplacement (7) pour effectuer des déplacements précis programmables, en sorte que la pile de panneaux (P) est pivotée dans le sens des aiguilles d'une montre ou dans le sens inverse des aiguilles d'une montre,
- b) un moyen de poussage (4) du type amovible, actionnable, concurremment avec ledit moyen d'agrippement (1), pour agir sur une pile (P) de manière programmable, en sorte d'aider la rotation désirée de la pile de panneaux (P),
caractérisé en ce que :
- c) le moyen d'agrippement (1) est actionné pour effectuer un mouvement rectiligne (3) pour se rapprocher ou s'éloigner de la ligne de coupe (Z) de la machine de coupe longitudinale,
- d) le moyen d'agrippement (1) est actionné pour saisir une pile (P) au niveau de l'un de ses angles arrière, et la pile (P) est pivotée dans le sens des aiguilles d'une montre ou dans le sens inverse des aiguilles d'une montre, suivant que la pile est saisie à proximité de son angle gauche ou de son angle droit,
- e) l'organe de poussage (4) est actionné pour agir sur une pile (P) en étant mis en mouvement parallèlement à la ligne de coupe (Z) de la machine de coupe longitudinale,
- f) l'ensemble étant agencé en sorte d'obtenir un encombrement réduit de la table de travail (Q) portant une pile (P) et la faisant pivoter de 90°, ladite table de travail étant réalisée par des techniques conventionnelles et n'ayant pas une structure spéciale.

2. Dispositif selon la revendication 1, dans lequel le moyen d'agrippement (1) pour faire pivoter une pile de panneaux est monté sur un chariot de poussage (7) de la machine de coupe longitudinale, lequel chariot est normalement actionné en sorte d'être mis en mouvement d'une manière précise programmable, des dispositions étant prises selon les besoins pour mettre hors service ou en état de fonctionnement le moyen d'agrippement, par exemple en le soulevant ou en l'abaissant, le moyen d'agrippement étant monté sur ledit chariot en sorte de pouvoir être pivoté autour de son axe vertical (2) sous la commande de moyens de pivotement (11, 12, 13, 14), lesquels positionnent correctement, sur commande, le moyen d'agrippement dans l'angle de rotation, en sorte que le moyen d'agrippement soit convenablement orienté, pour la première ou pour la seconde étape de rotation de la pile à effectuer, selon le cas respectivement pour une opération de pré-coupe de la pile, et pour la partie restante (B) de la pile à replacer dans sa position initiale par rapport à la ligne de coupe (Z) de la machine de coupe longitudinale.

3. Dispositif selon la revendication 1, caractérisé en ce qu'il comporte un moyen de commande programmable pour actionner le moyen d'agrippement (1) pour saisir une pile de panneaux sur son grand côté arrière à proximité de son angle (V1), en sorte que dans la première étape de rotation de la pile, celle-ci est pivotée de 90° autour de son axe vertical et est ainsi disposée avec son grand côté perpendiculaire à la ligne de coupe (Z) de la machine de coupe longitudinale, ledit angle (V1) coïncidant avec la ligne de repérage "zéro" de la table de travail de la machine de coupe longitudinale ou étant proche de ce repère, par rapport auquel le positionnement d'une pile est toujours le même quelles que soient les tailles des piles, des dispositions étant prises au démarrage de ladite première étape de rotation de la pile pour positionner le moyen de poussage (4) devant le grand côté antérieur de la pile, en un point intermédiaire de celui-ci, en sorte que, en phase avec le déplacement du moyen d'agrippement, ledit moyen de poussage (4) soit mis en mouvement vers la ligne (3) le long de laquelle ledit moyen d'agrippement est déplacé, jusqu'à ce que les grands côtés de la pile aient été tournés de 90°.

4. Dispositif selon la revendication 1, caractérisé en ce qu'il comporte un moyen de commande programmable pour actionner le moyen d'agrippement (1) en vue de saisir la pile sur son grand côté tourné vers le repère "zéro" de la table de travail de la machine de coupe, à proximité de l'angle (V2) se trouvant entre ce côté de la pile et le petit côté arrière de la pile, en sorte que dans la seconde étape de rotation de la pile, cette dernière soit pivotée de 90° autour d'un axe vertical et soit ainsi redisposée dans sa position précédente par rapport à la ligne de coupe (Z) de la machine de coupe longitudinale, le moyen de poussage (4) étant disposé, au début de cette seconde étape de rotation de la pile, à proximité et en un point intermédiaire dudit premier grand côté de la pile sur lequel agit le moyen d'agrippement, et étant mis en mouvement sous commande en s'éloignant de la ligne (3) le long de laquelle le moyen d'agrippement est mis en mouvement, jusqu'à ce que ledit grand côté de la pile ait été tourné de 90°.

5. Dispositif selon l'une des revendications précédentes, dans lequel le moyen d'agrippement (1) pour saisir et faire pivoter une pile de panneaux comporte un organe (25) formant mâchoire de serrage de profil, en vue latérale, en forme de "L", lequel organe est fixé de manière pivotante par son extrémité supérieure en (24) horizontalement à l'extrémité inférieure d'un tube (20) disposé verticalement et axialement coulissant dans un palier (10) dans lequel ce tube est claveté, ledit palier étant monté de manière à pouvoir être mis en rotation autour de son axe, par un support (8) fixé à la partie supérieure du chariot de poussage (7) de la machine de coupe longitudinale, et une plaque en saillie (21) étant fixée à l'extrémité supérieure dudit tube, le corps d'un ensemble (22) formant cylindre et piston commandé pneumatiquement et disposé verticalement étant fixé à ladite plaque (21), tandis que la tige dirigée vers le bas dudit ensemble (22) est fixée à une plaque (23), elle-même fixée à l'extrémité supérieure dudit palier (10) en sorte de faire saillie de celle-ci, et une tige (30) étant disposée de manière axialement coulissante dans ledit tube, et étant fixée à son extrémité supérieure à la tige d'un ensemble (31) formant cylindre et piston, commandé pneumatiquement, dont le corps est fixé à la plaque (21) à l'extrémité supérieure dudit tube, laquelle tige (30) porte à son extrémité inférieure l'autre organe (29) formant mâchoire de serrage du moyen d'agrippement, lequel organe est muni de tétons (28) aux extrémités d'un prolongement latéral de celui-ci, lesdits tétons pouvant coulisser dans des lumières longitudinales (27) ménagées dans chaque face interne de l'organe (25) inférieur formant mâchoire de serrage "L" et présentant chacune une partie supérieure inclinée (127) qui, lorsque lesdits tétons y sont engagés, contraint ledit organe inférieur formant mâchoire de serrage à prendre une position inclinée, en sorte que la partie inférieure ou pied (125) de celui-ci soit en saillie par rapport à la projection en plan dudit organe formant mâchoire de serrage supérieure, et l'organe formant mâchoire de serrage inférieure étant disposé dans une telle position inclinée, ledit organe formant mâchoire inférieure du moyen d'agrippement est alors abaissé, et l'organe formant mâchoire supérieure du moyen d'agrippement est ensuite abaissé sur commande en sorte, du fait desdits tétons mis en mouvement vers le bas par l'organe formant mâchoire supérieure durant la première partie de son trajet descendant, d'être amené à coopérer avec la partie droite des lumières formées dans les faces internes de l'organe formant mâchoire inférieure, un basculement de l'organe formant mâchoire inférieure étant réalisé en sorte que son pied (125) est glissé sous une pile de panneaux, sans toutefois que ledit pied touche la pile, et dès que l'organe formant mâchoire supérieure a terminé son mouvement descendant en venant en contact avec la pile, l'organe formant mâchoire inférieure est soulevé par réaction par l'organe formant mâchoire supérieure, grâce à quoi la pile de panneaux est serrée par le moyen d'agrippement.

6. Dispositif selon la revendication 5, dans lequel le palier (10) supportant de manière pivotante le moyen d'agrippement (1) de saisie d'une pile de panneaux, est muni d'une couronne dentée (11) clavetée à l'extérieur du palier et en prise avec une crémaillère (12) entraînée par les ensembles (13, 14) formant cylindre et piston actionnés pneumatiquement, au moyen desquels le moyen d'agrippement peut être positionné de manière variée dans l'angle de rotation, en sorte d'être actionnée de façon à saisir correctement une pile de panneaux avant les deux étapes successives de rotation de la pile.

7. Dispositif selon la revendication 1, dans lequel le galet de poussage (4) qui est actionné en combinaison avec ledit moyen d'agrippement (1) en vue de faire pivoter une pile, de panneaux, est agencé verticalement et librement pivotant, en sorte de pouvoir être monté et descendu, au moyen d'un ensemble approprié (40) formant cylindre et piston, le long d'une glissière (33) montée sur un chariot (36) coulissant sur un guide horizontal (38) logé sous la table de travail portant la pile, et parallèlement à la ligne (5) le long de laquelle ledit galet de poussage est déplacé, des dispositions étant prises pour actionner ledit chariot de manière précise par un mécanisme à entraînement positif (42, 43, 43') au moyen d'un moto-réducteur (44) commandé électroniquement, ledit mécanisme d'entraînement étant du type à roues dentées/courroie dentée, du type pignons/chaîne, ou du type pignon/crémaillère.
